**Europäisches Patentamt**

**European Patent Office**

**Office européen des brevets**

(19)

(11) Numéro de publication : **0 554 177 A1**

# (12) DEMANDE DE BREVET EUROPEEN

(21) Numéro de dépôt : **93400209.8**

(22) Date de dépôt : **28.01.93**

(51) Int. Cl.⁵ : **G06F 15/415,** G06F 15/409

(30) Priorité : **31.01.92 FR 9201082**

(43) Date de publication de la demande :
**04.08.93 Bulletin 93/31**

(84) Etats contractants désignés :
**DE GB**

(71) Demandeur : **FRANCE TELECOM**
**Etablissement autonome de droit public, 6,**
**Place d'Alleray**
**F-75015 Paris (FR)**

(72) Inventeur : **Ali-Yahia, Tahar**
**2, Sente de la Marguette**
**F-78220 Viroflay (FR)**
Inventeur : **Dana, Michel**
**53, rue de la Colonie**
**F-75013 Paris (FR)**

(74) Mandataire : **Dubois-Chabert, Guy**
**Société de Protection des Inventions 25, rue**
**de Ponthieu**
**F-75008 Paris (FR)**

(54) **Architecture de mémoire associative.**

(57) L'invention concerne une mémoire associative permettant de réaliser toutes sortes d'opérations de comparaison. Elle comporte un plan mémoire (1) dans lequel un argument de recherche, qui a été traité dans un module de scrutation (3) et une unité de masquage (5, 7), est comparé aux données stockées dans la mémoire. A la suite de cette comparaison, les données de résultats obtenues sont enregistrées dans un registre de réponses (11). Lorsque les données de recherche et les données stockées comportent une association de mots de longueur variable, les données de résultat sont traitées dans un module de traitement des mots de longueur variable (13) et dans un module de gestion des réponses multiples.

L'invention s'applique aux traitements informatiques, tels que le traitement de bases de données et l'exécution des langages d'intelligence artificielle.

FIG. 1

EP 0 554 177 A1

L'invention concerne une architecture de mémoire associative supportant différents tests de comparaison ainsi que des opérations sur des mots de longueur variable.

Une telle mémoire peut être utilisée dans la plupart des domaines informatiques où les réponses recherchées sont le résultat de comparaisons entre un argument de recherche et un ensemble de mots contenus dans la mémoire associative. Cette invention trouve ses applications, notamment dans le traitement de bases de données (avec, par exemple, des opérations d'algèbre relationnel), dans l'exécution des langages d'intelligence artificielle (avec, par exemple, le filtrage de clauses dans PROLOG, l'évaluation d'appel de fonctions dans LISP la recherche de méthodes dans les langages objet), et dans les réseaux locaux très rapides FFDI à fibre optique (avec, par exemple, le filtrage d'adresse, les passerelles, les répéteurs).

Le concept de mémoire associative est vu, généralement, comme un moyen efficace pouvant améliorer sensiblement les performances des calculateurs face à des applications spécifiques nécessitant des temps de calculs excessifs.

En effet, une mémoire associative est un dispositif de stockage des données, dans lequel la recherche desdites données se fait directement sur le contenu de la mémoire et non sur les adresses des données stockées dans la mémoire.

Les architectures de mémoires associatives connues varient, généralement, en fonction des applications traitées. La mémoire associative utilisée pour les calculateurs Data Flow (de la Société Japonaise MATSUSHITA ELECTRICAL INDUSTRIAL) est décrite dans l'article de Hiroshi KADOTA and AI, intitulé "An 8-Kbit content-Addressable and Reetrant Memory", paru dans l'IEEE Journal of Solid-State Circuits, volume SC-20, n° 5, Octobre 1988, pages 543 à 547.

Une autre architecture de mémoire associative a été utilisée pour les réseaux locaux (AMD, Am99C10) annoncée dans l'article intitulé "Donnez-lui le mot de passe, la mémoire se chargera de trouver l'information" de l'Electronique Hebdo, n° 97, 1989, page 19.

Un autre type d'architecture de mémoire associative, dédié au traitement du signal et des images, est décrit dans le document de Simon R. JONES and AI, intitulé "A 9-Kbit Associative Memory for Hight-Speed Parallel Processing Applications", paru dans l'IEEE Journal of Solid-State Circuits, vol. 23, n° 2, April 1988, pages 543-547.

D'autres architectures de mémoires associatives pour les applications spécifiques d'intelligence artificielle, pour les réseaux de neurones, pour le traitement de listes dans LISP et le parcours rapide de graphes sont décrites dans des documents rédigés par Takeshi OGURA, L. T. CLARK et R. 0. GRONDIN, et H. SHIN et M. MALEK, ces documents étant respectivement intitulés et publiés "A 20 Kb CMOS Associative Memory Lsi for Artificial Intelligence Applications", dans Proceedings of the IEEE Int, Conf. on Computer Design (ICCD 86), pages 574-577, "A Pipelined Associative Memory Implemented in VLSI", dans IEEE Journal of Solid-State Circuits, vol. 24, N° 1, February 1989, pages 28-34, et "A Boolean Content Addressable Memory and its Applications", dans Proceedings of the IEEE, vol. 73, n° 6, June 1985, pages 1 142-1 144.

De nombreux autres types d'architectures de mémoires associatives sont décrits dans différentes publications. Toutes ces mémoires associatives ne peuvent cependant être utilisées que pour la réalisation d'un nombre limité d'applications.

En effet, les architectures connues (et notamment les architectures décrites dans les documents précités) ont une organisation (parallèle, bit-série, mot-série, etc) dépendante de la (ou éventuellement de quelques) application(s) cible(s).

La présente invention a justement pour avantage de permettre l'utilisation des mémoires associatives dans une pluralité d'applications.

La taille des mémoires associatives est limitée par deux sortes de paramètres : les paramètres économiques et les paramètres techniques.

Les limitations dues aux paramètres économiques peuvent être amoindries en considérant différentes organisations réalisant un compromis entre la vitesse de la mémoire, la taille de la mémoire et son coût (le coût de la mémoire est fixé par le coût des éléments de stockage et celui des interconnexions des cellules mémoires).

Les paramètres techniques sont ceux qui limitent la taille d'un mot mémoire et la taille de la mémoire. De façon plus précise, les paramètres qui, dans l'art antérieur, forment un obstacle à l'utilisation des mémoires associatives dans des domaines d'application variés sans avoir à reconcevoir l'architecture de la mémoire pour chaque application, sont : le traitement de mots ou d'associations de mots de longueur variable, ou encore l'augmentation de la taille des mots, l'absence de structure matérielle intégrée dans la mémoire pour exécuter des opérations de texte autres que l'égalité, et des applications complexes qui en découlent.

La présente invention permet justement de résoudre les limitations dues à certains de ces paramètres techniques. Le document intitulé "A 20kb CMOS Associative Memory LSI for Artificial Intelligence", dans Proceedings of the IEEE Int Conf. on Computer Design (ICCD 86), pages 574-577, propose une solution pour tenter de résoudre le problème de la longueur variable d'association de mots. L'auteur y décrit, effectivement, que le mot mémoire est découpé en un champ "information" codé sur 32 bits et en un champ "numéro" codé sur 8 bits. Le champ numéro permet de numéroter les mots appartenant à une même association. Cette solution est coûteuse sur le plan de la complexité matérielle et réduit la possibilité d'augmenter la taille du champ information de la mémoire en intégrant le traitement des mots de longueur variable dans le plan mémoire. Bien que cette solution résolve le problème de gestion de mots de longueur variable, elle n'est pas adaptée, notamment, aux opérations de reconnaissance d'occurrences de chaînes de caractères dans les textes.

Une autre solution est décrite par C. STORMON, M. BRULE, J. OLDFIELD et J. C. D. F. RIBEIRO, dans le texte intitulé "An Architecture Based on Content-addressable Memory for the Rapid Execution of Prolog", rendu public dans Proc. of the Fifth International Conf. and Symposium on Logic Programming, pages 1448 à 1473, August 1988. Cette solution pour résoudre le problème du traitement des mots de longueur variable a inclu également la prise en compte de signaux issus d'un module de gestion des réponses multiples. Dans ce cas également, la solution adoptée est conçue pour la sélection de clauses dans PROLOG.

Une autre solution encore nécessite que tous les mots rangés dans la mémoire aient la même taille et que l'adresse du début de chaque mot ait besoin d'être connue avant l'étape de recherche. Cette solution est proposée par Stuart J. ADAMS et al., dans le texte intitulé "A Parallel general Purpose CAM Architecture" publié dans In Proceedings of the Fourth MIT Conf. Advanced Research in VLSI, pages 51-71, 1986.

La présente invention a justement pour objet de proposer une architecture de mémoire associative qui regroupe, sur un seul circuit intégré, les fonctionnalités capables de supporter toutes sortes d'applications nécessitant un adressage par le contenu.

L'invention comporte donc des moyens pour traiter les mots ou les associations de mots de longueur variable et des moyens pour traiter des opérations autres que le test d'égalité. Grâce à ces moyens, les mémoires associatives réalisées suivant l'architecture de l'invention, permettent d'élargir l'éventail des applications cibles, telles que les langages d'intelligence artificielle, les opérations sur les bases de données et toutes les opérations nécessitant une étape de reconnaissance de chaînes de caractères.

On considèrera, dans toute la description qui va suivre, qu'une association de mots est un ensemble ordonné de mots dont le nombre desdits mots peut varier ainsi que la longueur de chacun des mots.

De façon plus précise, la présente invention a pour objet une mémoire associative permettant la comparaison de données de recherche (appelées aussi arguments de recherche) avec une pluralité de données stockées dans au moins un registre de données et disponibles sur des sorties de ce registre, et comportant :

- des moyens de comparaison, ayant des entrées reliées aux sorties du registre de données, pour traiter les données de recherche et comparer lesdites données de recherche avec les données stockées, ces moyens de comparaison fournissant, sur au moins une sortie, des données de résultat ;
- des moyens de manipulation, ayant au moins une entrée reliée à la sortie des moyens de comparaison, pour traiter les données de résultat obtenues après comparaison des données de recherche avec les données stockées ;
- une unité de contrôle, ayant des sorties reliées à des entrées de commande des moyens de comparaison et de manipulation, pour contrôler des échanges d'informations entre les moyens de comparaison et les moyens de manipulation, caractérisée en ce que les moyens de manipulation comportent une unité de traitement d'associations de mots de longueur variable, chaque donnée de recherche et chaque donnée stockée comprenant un mot ou une association de mots de longueur variable.

Avantageusement, les moyens de comparaison comportent un plan mémoire et une unité de prétraitement générant, à partir des données de recherche, des données de comparaison pour exécuter, dans le plan mémoire, une pluralité de fonctions de comparaison.

En outre, les moyens de comparaison comportent une unité de masquage, reliée à une sortie de l'unité de prétraitement et à une entrée du plan mémoire, pour masquer au moins une partie d'un mot d'une donnée de comparaison de façon à ce que, dans le plan mémoire, la partie non masquée du mot soit comparée avec des parties correspondantes des mots des données stockées.

Selon un mode de réalisation de l'invention, l'unité de prétraitement comporte, d'une part, un registre à décalage relié à une sortie du registre de données et à une entrée de l'unité de contrôle, un décompteur de bit relié à une sortie de ladite unité de contrôle et un décodeur relié à une sortie du décompteur de bit, et, d'autre part, un registre d'adresses connecté à la sortie du registre de données et un circuit logique OU-exclusif connecté à une sortie du registre d'adresses et à une sortie du décodeur pour fournir la donnée de comparaison.

Selon un autre mode de réalisation de l'invention, l'unité de prétraitement comporte, d'une part, un premier registre à décalage relié à une sortie du registre de données et à une entrée de l'unité de contrôle et un second registre à décalage relié à une sortie de ladite unité de contrôle, et, d'autre part, un registre d'adresses connecté à la sortie du registre de données et un circuit logique OU-exclusif connecté à une sortie du registre d'adresses et à une sortie du second registre à décalage pour fournir la donnée de comparaison.

De façon avantageuse, l'unité de traitement des associations comprend un module de traitement des mots pour gérer un dialogue entre les mots d'une même association, chaque mot d'une association comportant un champ de position indiquant la position du mot dans l'association et un champ de résultat indiquant le résultat de la comparaison du mot de la donnée de recherche avec les mots de donnée de recherche avec les mots des données stockées, la gestion du dialogue s'effectuant en fonction des indications contenues dans les champs de position et de résultat.

De plus, l'unité de traitement des associations comporte un module de gestion de réponses multiples pour générer une adresse à chacune des données de résultat.

D'autres avantages et caractéristiques de l'invention apparaîtront dans la description qui va suivre, donnée à titre illustratif, mais nullement limitatif, en référence aux dessins dans lesquels :

- la figure 1 représente de façon fonctionnelle l'architecture de la mémoire associative Selon l'invention ;
- les figures 2A et 2B représentent, de façon fonctionnelle, deux modes de réalisation du module de scrutation ;
- la figure 3 représente, selon un diagramme fonctionnel, une architecture du module de traitement des mots de longueur variable ;
- la figure 4 représente le schéma logique de l'opérateur TAG, c'est-à-dire l'opérateur de traitement des mots de longueur variable ;
- la figure 5 illustre les étapes d'un test d'inégalité pour une donnée de recherche ayant la valeur 01010 prise à titre d'exemple ;
- la figure 6 illustre une opération de recherche de données comprises entre deux limites, la limite réalisée par la valeur 01110 et par la valeur 11001.

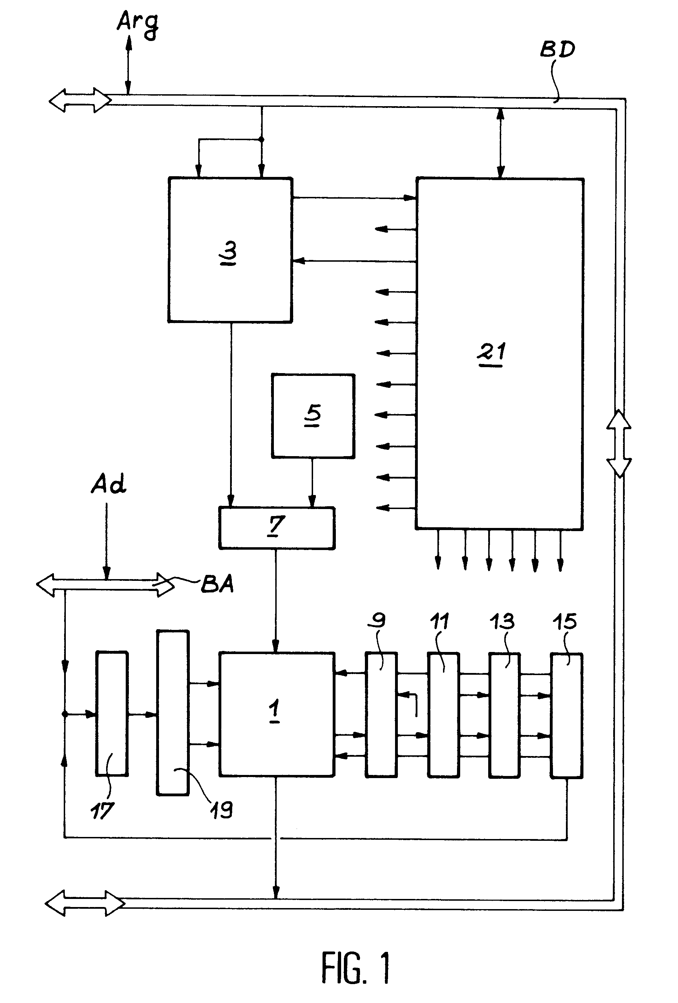

Sur la figure 1, on a représenté, selon un schéma fonctionnel, l'architecture de mémoire associative selon l'invention. Cette mémoire associative comporte différents types d'éléments, à savoir des éléments de mémorisation, des éléments de traitement et des éléments d'acheminement de données et d'adresses. Les éléments de mémorisation sont constitués de différents registres, tels qu'un registre d'adresses, un registre de données, un registre de réponses et un registre de masquages. Les éléments de traitement sont composés d'un module de masquage, d'un module de scrutation, d'un plan de mémoire associative, d'un module de gestion des réponses multiples, d'un module de traitement de mots de longueur variable et d'une unité de contrôle.

Sur cette figure 1, on a référencé le bus d'adresses par BA et le bus de données par BD, ces bus permettant d'acheminer respectivement les adresses Ad et les données Arg, notamment, vers le module de scrutation, le plan mémoire et l'unité de contrôle.

Le plan mémoire 1 est constitué d'un ensemble de points mémoire statiques, chaque point étant généralement constitué d'un ensemble de transistors pour mémoriser l'information et d'une logique de comparaison. En effet, les arguments de recherche Arg introduits dans la mémoire associative sont comparés aux données stockées mémorisées dans ladite mémoire (dans un registre de données, par exemple).

Aussi, outre ce plan mémoire 1, les moyens de comparaison sont constitués du module de scrutation 3, du registre de masquage 5 et du module de masquage 7.

La mémoire associative comprend, en outre, des moyens de manipulation constitués d'un module d'accumulation des résultats 9, d'un registre de réponses 11, d'un module de traitement des mots de longueur variable 13 et d'un module de gestion des réponses multiples 15. Elle comprend également le registre d'adresses 17 et un décodeur 19.

L'unité de contrôle 21 assure le contrôle des échanges d'informations entre les différents modules et registres de la mémoire associative.

L'argument de recherche Arg est introduit dans les moyens de comparaison et, plus précisément dans le module de scrutation 3, par l'intermédiaire du bus de données BD. De même, les données contenues dans le plan mémoire 1 sont envoyées également sur le bus de données BD et l'unité de contrôle 21 reçoit et gère les informations concernant ces données. Aussi, le bus de données BD reçoit, soit la donnée à comparer, soit l'adresse d'une donnée à lire ou à écrire.

L'architecture de mémoire associative proposée permet, comme il a été dit précédemment, d'effectuer des opérations autres que l'égalité, entre un argument de recherche et des données stockées dans la mémoire. Cette architecture permet donc de ramener toutes sortes d'opérations de comparaison (telles que les inégalités, les tests de supériorité, d'infériorité, etc) à une succession d'opérations d'égalité, et ce afin de ne pas ajouter de circuit logique dans le plan mémoire, par rapport au plan mémoire utilisé dans les arts antérieurs.

Pour cela, on utilise un module de scrutation 3, un registre de masquage 5 et un module de masquage 7. Le module de scrutation 3 permet de générer une donnée de comparaison en partant de l'argument de recherche Arg. Cette donnée de comparaison est apte à être introduite dans le module de masquage 7 pour y être en partie traitée avant d'entrer dans le plan mémoire 1 où elle sera comparée aux données stockées dans la mémoire.

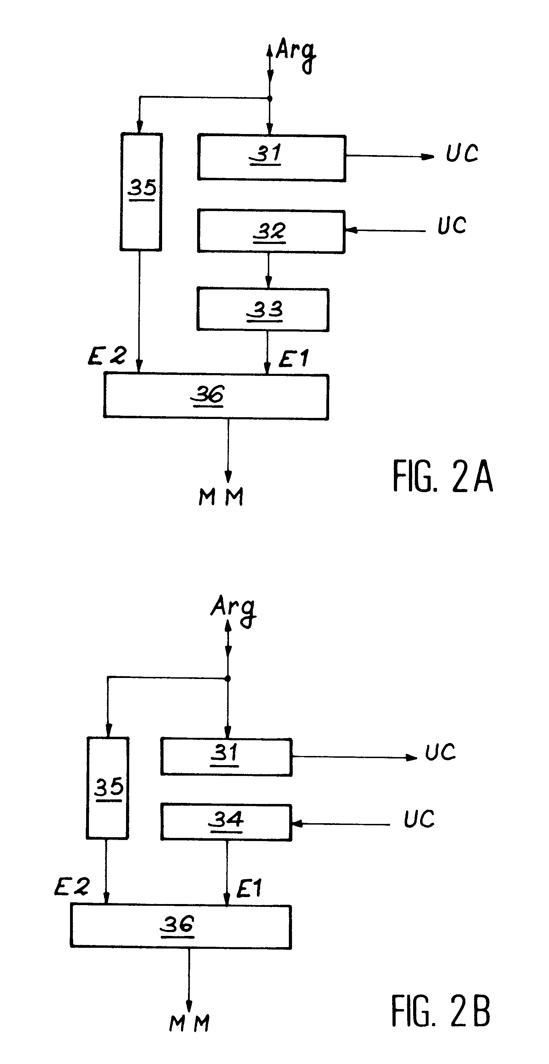

De façon plus précise, ce module de scrutation 3 comprend, selon un premier mode de réalisation représenté sur la figure 2A, un registre à décalage 31, un décompteur 32, un décodeur 33, un registre d'adresses 35 et une porte logique OU-exclusif 36. Le registre à décalage 31 est connecté, à sa sortie, à l'unité de contrôle symbolisée par UC sur la figure. Le décompteur 32 est connecté, à son entrée, à l'unité de contrôle UC et, à sa sortie, au décodeur 33. En parallèle de cet ensemble constitué du registre de décalage 31, du décompteur 32 et du décodeur 33, est connecté le registre d'adresses 35, ledit registre 35 et ledit ensemble 31, 32, 33 étant connectés sur les deux portes d'entrée de la porte logique OU-exclusif.

L'argument de recherche est introduit en entrée du registre d'adresses 35 et de l'ensemble 31, 32, 33. L'argument de recherche est, d'une part mémorisé dans le registre d'adresses 35, d'autre part, introduit dans le registre à décalage 31. A ce moment, le décompteur 32 est initialisé à sa valeur maximum, qui est le plus souvent 32.

Dans les exemples de tests de comparaison expliqués ultérieurement, l'argument de recherche contient 5 bits ; dans un tel cas, le décompteur serait alors initialisé à la valeur 5.

A chaque pulsation d'horloge, le registre à décalage 31 se décale vers la gauche, c'est-à-dire qu'il va du bit de poids faible vers un bit de poids plus fort. A chacun de ces décalages, le décompteur 32 décrémente son contenu de 1. Ces opérations de décalage et de décrémentation sont réitérées jusqu'à ce que la valeur 0 du bit de sortie du registre à décalage 31 soit rencontrée. A ce moment, le décodeur 33 reçoit la valeur contenue dans le décompteur 32, c'est-à-dire la valeur correspondant à la position de ce dernier bit à 0. Le décodeur 33 indique alors, en sortie, la position de ce bit en mettant ce bit à 1 et en laissant les autres bits à 0. C'est cette dernière donnée (à savoir, la donnée indiquant la position du dernier bit à 0) qui est introduite dans le circuit logique OU-exclusif 36 par l'entrée E1, en même temps que l'argument de recherche Arg, mémorisé dans le registre d'adresses 35, est introduit par l'entrée E2 dans le circuit logique OU-exclusif 36. On obtient alors, à partir de ces deux dernières données, la donnée de comparaison qui est envoyée vers le module de masquage symbolisé par MM sur la figure. Une information de l'état du registre à décalage 31 est envoyée vers l'unité de contrôle qui peut alors transmettre l'information au registre de masquage.

Un autre mode de réalisation du module de scrutation a été représenté sur la figure 2B. Selon ce mode, le module de scrutation comprend deux registres à décalage 31 et 34 connectés en parallèle avec un registre d'adresse 35.

Le premier registre à décalage 31 reçoit, en entrée, l'argument de recherche Arg ; sa sortie est connectée à l'unité de contrôle symbolisée par UC. Le second registre à décalage 34 est connecté, en entrée, à ladite unité de contrôle UC et, en sortie, au circuit logique OU-exclusif 36. La sortie de ce registre d'adresse 35 et la sortie du second registre à décalage sont connectées aux entrées respectives E2 et E1 de la porte logique OU-exclusif. Le premier registre à décalage 31 reçoit la valeur de l'argument de recherche. Il en est de même pour le registre d'adresses 35 qui mémorise ledit argument de recherche. A l'état initial, le second registre à décalage 34 est initialisé à 0, sauf son bit de poids fort, c'est-à-dire que son bit de poids fort est à 1 et tous les autres bits sont à 0.

Aussi, à chaque opération de décalage effectuée par ce premier registre à décalage 31 sur l'argument de recherche Arg, deux traitements sont possibles en fonction de la valeur du bit de sortie : si le bit de sortie est égal à 0, le second registre à décalage 34 décale son contenu d'une position vers la droite, c'est-à-dire qu'il va du bit de poids le plus fort vers le bit de poids le plus faible ; si le bit de sortie est égal à 1, on commande l'exécution de la porte logique OU-exclusif 36, avec, en entrée, d'une part l'argument de recherche contenu dans le registre d'adresses 35 et, d'autre part, le contenu du second registre à décalage 34. On obtient, en sortie du circuit logique 36, la donnée de comparaison qui est introduite dans le module de masquage symbolisé par MM sur la figure.

De même que pour le premier mode de réalisation du module de scrutation 3 une information concernant l'état du premier registre à décalage 31 est envoyée vers l'unité de contrôle qui retourne une information quant à l'état dudit premier registre à décalage 31, au registre de masquage.

Ce registre de masquage comprend, selon un mode de réalisation de l'invention, un registre à décalage. Il permet de désigner les bits de l'argument de recherche (c'est-à-dire de la donnée à comparer) qui interviennent dans les opérations de comparaison. A l'état initial, tous les bits sont initialisés à 1. A chaque pulsation d'horloge, le registre de masquage décale son contenu d'une position vers la droite (c'est-à-dire du bit du poids le plus fort vers le bit de poids le plus faible). De cette façon, les bits rentrants de "valeur 0" correspondent aux bits impliqués dans la comparaison. Les bits restant à "1" correspondent aux bits masqués.

L'opération effectuée par la porte logique OU-exclusif 36 entre le contenu du registre d'adresses 35 contenant l'argument de recherche et la sortie du décodeur 33 (ou du second registre à décalage 34, pour le second mode de réalisation) a pour résultat une valeur que l'on a appelée "donnée de comparaison". On a ainsi reproduit l'argument de recherche initial dans lequel le premier bit égal à 0 est mis à 1.

L'opérateur OU-exclusif est universel pour les deux tests d'inégalité (supériorité ou infériorité). En effet, si l'opération réalisée est un test tel que "A inférieur à ?", l'étape effectuée par le module de scrutation aura pour critère de recherche les bits égaux à 0. Par contre, si l'opération réalisée est un test du type "A supérieur à ?", l'étape de scrutation aura pour critère de recherche, les bits égaux à l'argument de recherche.

L'architecture selon l'invention réalise les tests d'inégalité de manière séquentielle par tranche de X bits (X étant la taille du mot mémoire, par exemple "32"), en mettant en jeu des données supérieures à ladite taille du mot mémoire (X bits). En considérant un test d'inégalité sur des nombres de 2X bits, l'opération de recherche de tous les mots de la mémoire associative dont le contenu est inférieur à une donnée A (considérée comme argument de recherche), consiste à effectuer le test d'inégalité en deux étapes sur des tranches de X bits en utilisant la fonction :

$(A > ?) = 1$ si $(A1 > B1) + (A1 = B1)(A2 > B2)$, où A1 et B1 sont les X premiers bits de poids fort et A2 et B2 les X derniers bits de poids faible.

La plupart des autres opérations de comparaison peuvent être réalisées au moyen d'opérations de tests portant sur l'égalité et/ou l'inégalité. Leur implantation ne nécessite donc aucun changement de l'architecture de mémoire associative selon l'invention.

Une opération de recherche de valeurs comprises dans un intervalle [B, C] est obtenue selon les étapes suivantes :

Première étape : il s'agit tout d'abord de tester l'inégalité dans laquelle les valeurs des données en mémoire sont supérieures à B, au moyen des opérations décrites précédemment ;

Deuxième étape : il s'agit de même de tester l'inégalité dans laquelle les valeurs des données stockées sont inférieures à C, au moyen des opérations également décrites précédemment ; et

Troisième étape : il s'agit d'effectuer l'intersection des résultats obtenus dans les première et seconde étapes citées précédemment ; cette intersection consiste à effectuer une opération d'égalité entre les valeurs obtenues à chacune des étapes précédentes.

L'architecture selon l'invention permet également de réaliser des opérations telles que la recherche du maximum, la convergence (par valeur inférieure ou par valeur supérieure), les calculs d'une limite absolue, et la recherche de proximité, etc, toutes ces opérations pouvant être ramenées à une succession d'opérations d'égalité et/ou d'inégalité.

Sur la figure 1, on a également représenté les moyens de manipulation. Ces moyens comprennent le module d'accumulation des résultats 9, le registre de réponse 11, le module de traitement des mots de longueur variable 13 et le module de gestion des réponses multiples 15.

Ces moyens de manipulation permettent essentiellement de traiter des associations de longueur variable dont la taille n'est limitée que par la capacité de la mémoire associative.

Pour gérer des associations de tailles variables, c'est-à-dire comprenant un nombre de mots variables, on introduit un nombre d'informations supplémentaires dans le codage des associations afin d'établir un dialogue et un arbitrage entre les mots appartenant à une même association. Pour cela, on utilise un module de traitement des mots de longueur variable, appelé "TAG".

Afin d'utiliser ce module TAG, on attribue à chaque donnée (donnée de recherche et/ou donnée stockée), et plus particulièrement à chaque mot de l'association, un champ appelé "Next", qui comprend une information quant à la position du mot dans une association de mots de longueur variable.

Selon un mode de réalisation de l'invention, les champs Next sont attribués aux mots de données stockées. Un autre mode de réalisation, dans lequel les champs Next sont attribués aux mots des données de recherche, sera décrit ultérieurement.

Ce champ Next est également appelé "champ de position du mot".

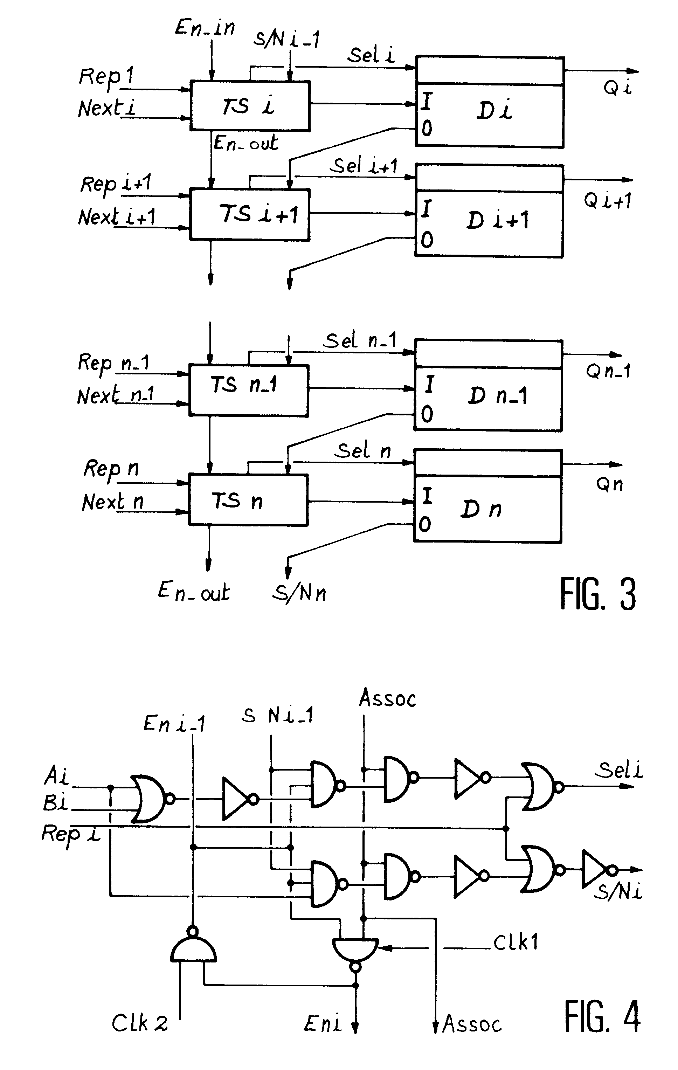

Chaque mot de chaque association comprend en outre un champ de réponse (ou champ de résultat), nommé Rep sur les figures 3 er 4. Ce champ comporte l'information de réponse obtenue lors de la comparaison du mot auquel elle est associée avec les mots des données stockées.

Le module TAG est organisé en plusieurs parties, appelées "tranches de TAG" ou "TAG-SLICE". Chaque mot d'une association est traité par un TAG-SLICE. Ces TAG-SLICE sont organisés de façon synchrone, même si, vu de l'extérieur, le traitement effectué par un module TAG est asynchrone.

Sur la figure 3, on a représenté l'architecture de ce module de traitement de mots de longueur variable TAG comportant une succession de TAG-SLICE. Chaque TAG-SLICE prend en considération le champ de réponse Rep et le champ Next du mot qu'il traite ; par exemple sur la figure 3, le premier TAG-SLICE TSi représenté traite le ième mot de l'association qui a pour champ de réponse $Rep_i$ et pour champ Next, $Next_i$. Ce premier TAG-SLICE TSi prend donc en considération cette information $Rep_i$ et cette autre information $Next_i$. De plus, ce TAG-SLICE reçoit des signaux de réponse au moyen du signal de dialogue appelé Enable (En-in ou En-out), ce signal de dialogue provenant du TAG-SLICE précédent, c'est-à-dire du TAG-SLICE traitant le i-1ème mot de l'association. En effet, chaque signal de dialogue assure une synchronisation entre deux tranches successives de l'opérateur TAG.

Ce TAG-SLICE reçoit de plus le signal Some/None, $S/N_{i-1}$, provenant du TAG-SLICE traitant le i-1ème mot. Ce signal Some/None indique à l'unité de contrôle la présence ou non d'une réponse. Ce signal est utilisé pour le calcul des signaux de sélection $Sel_i$. Ce signal de sélection Sel est envoyé sur une bascule Di maître/esclave pour signaler l'état du résultat de la comparaison déjà exécuté dans l'association dont les mots ont une position inférieure ou égale au mot de position i. En effet, Repi indique si le ième mot a été trouvé en mémoire ; le signal Some/None, $S/N_{i-1}$, transmet le résultat trouvé au TAG-SLICE du i-1ème mot. Ainsi, si le ième mot a été trouvé dans la mémoire, c'est-à-dire si $Rep_i$ est égal à 1 (c'est-à-dire qu'il contient l'information que le ième mot existe en mémoire) et si le signal Some/None, $S/N_{i-1}$, provenant du i-1ème mot indique que la partie traitée de l'association existe dans la mémoire, alors le signal $Sel_i$ enverra sur la bascule Di une information pour signifier que la partie de l'association allant jusqu'au ième mot a été trouvée dans la mémoire. Parallèlement un signal est envoyé du TAG-SLICE $TS_i$ sur l'entrée i de la bascule Di. On obtient alors en sortie de cette bascule Di, une valeur Qi (de valeur 0 ou 1) indiquant si le début de l'association a été trouvé intact en mémoire.

Une sortie haute de la bascule Di envoie le signal Some/None, $S/N_i$ vers le TAG-SLICE $TS_{i+1}$ suivant, c'est-à-dire le TAG-SLICE traitant le i+1ème mot de l'association. Le TAG-SLICE du ième mot génère également un signal Enable à destination du TAG-SLICE $TS_{i+1}$.

Il en est ainsi pour tous les TAG-SLICES du module de traitement de mots de longueur variable jusqu'au TAG-SLICE du ième et dernier mot de l'assocation. On obtient alors la valeur Qn à la sortie de la dernière bascule Dn.

Ainsi, l'indication dans le champ Next du début d'une association (par exemple, l'indication que le mot considéré est le premier dans l'association), permet de prendre en compte la réponse du premier mot d'une association impliqué dans la comparaison. Au cours de la sélection suivante, l'opérateur TAG du premier mot d'une association (premier TAG-SLICE) génère le signal Enable-out (signal Enable en sortie, En-out) vers le mot suivant afin que ne soient prises en compte que les réponses des mots contigus au premier. Il remet ensuite à zéro son signal Enable-in (signal Enable en entrée, En-in) afin que les réponses que l'on peut obtenir au cours des comparaisons des mots suivants ne soient pas prises en compte à ce niveau.

La valeur de ce signal dépend de celle du signal Enable-in. Les signaux Enable permettent de prévenir la prise en compte de réponses simultanées de deux occurrences d'un élément d'une même association.

Pour tous les éléments d'une même association, excepté pour le dernier mot de l'association, les signaux $Sel_i$ sont mis à zéro quelles que soient les valeurs des signaux de réponses Repi obtenues. C'est donc la valeur du signal de sélection du dernier mot de chaque association $Sel_n$ qui reflète le résultat obtenu pour toute l'association.

La propagation des signaux de réponses entre deux mots successifs d'une même association est obtenue au moyen d'un signal Some/None (qui, on le rappelle, indique la présence ou non d'une réponse) calculé dans chaque TAG-SLICE, de façon à ce que le calcul de la valeur du dernier signal Sel de sélection de chaque association soit correct.

Sur la figure 4, on a représenté le schéma du circuit logique de l'opérateur TAG et, plus particulièrement, d'une tranche de TAG, c'est-à-dire d'un TAG-SLICE. Ce circuit logique comprend des portes logiques NON-ET, des portes logiques NON-OU, et des inverseurs.

En entrée d'un TAG-SLICE, on a le champ de réponse $Rep_i$, comme expliqué dans la figure précédente, et des bits de position Ai et Bi en entrée sur les deux entrées de la même porte NON-OU. On voit également sur ce schéma logique, les entrées des signaux Enable $En_{i-1}$ provenant du TAG-SLICE $TS_{i-1}$ et les signaux Some/None $S/N_{i-1}$ provenant de ce même TAG-SLICE $TS_{i-1}$. On voit également deux horloges envoyant des signaux d'horloge CLK1 et CLK2 sur des portes NON-ET et une commande ASSOC, en entrée, qui est envoyée par l'unité de contrôle. Cette commande ASSOC indique que l'on traite des associations de tailles supérieures à X bits (par exemple 32). Elle est donc gérée par l'unité de contrôle.

Chaque opération d'adressage par le contenu permet de coder des informations relatives aux registres de données, de masquage, à l'adressage par le contenu et à la lecture des réponses obtenues. Les paramètres qu'elle contient indiquent le type de l'accès associatif à réaliser (accès simple ou multiple), la valeur du masque, la valeur de la clé de sélection et le type de la gestion de réponses multiples à effectuer (lecture de la première réponse, lecture de la suivante, lecture de toutes les réponses).

On voit également sur ce schéma de circuit logique de la figure 4, les différentes sorties d'un TAG-SLICE, à savoir la sortie Enable-out, une sortie Assoc qui envoie les informations vers le TAG-SLICE suivant, une sortie de signaux de sélection Sel et une sortie de signaux Some/None.

La valeur "1", sur le dernier signal de sélection $Sel_n$ de chaque association, indique au module de gestion de réponses multiples connecté en sortie des bascules que tous les mots d'une même association répondent aux critères de sélection. Une valeur "0" signifie, au contraire, que tous les mots d'une même association ne répondent pas aux critères de sélection.

Un tel traitement des associations de tailles variables permet de préserver l'homogénéité du séquencement des opérations, afin d'éviter d'éventuels effets de bord, et permet également d'utiliser un module de réponses multiples d'un type courant quels que soient les types d'opérations d'adressage par le contenu. Ce module de gestion des réponses multiples assure la lecture des réponses en sortie du TAG. Cette lecture de réponse peut s'effectuer de plusieurs manières :

- les réponses d'une même association peuvent être lues à partir de la dernière, c'est-à-dire dans le cas où la mémoire est organisée en piles ;

- ces réponses peuvent être lues à partir de la
première réponse.

Quel que soit le mode de réalisation de lecture des réponses d'une même association, on utilise un additionneur/soustracteur. Cet additionneur/soustracteur reçoit, en entrée, la taille de l'association et l'adresse du dernier signal de sélection Sel ayant satisfait le critère de sélection.

Dans le premier mode de réalisation de lecture des réponses, c'est-à-dire lorsque la lecture se fait à partir de la dernière réponse, l'adresse est décrémentée au fur et à mesure que les réponses sont lues.

Dans le second mode de réalisation, lorsque les réponses sont lues à partir de la première réponse, on effectue une soustraction entre l'adresse fournie par le module de gestion des réponses multiples et la taille de l'association afin de commencer la lecture à partir du premier mot.

Dans le cas d'associations complexes, c'est-à-dire par exemple pour des opérations de recherche de chaînes de caractères dans un texte, l'architecture de mémoires associatives proposée peut être utilisée. Dans ce cas, on réalise les opérations de recherche en utilisant le champ Next de la clé de recherche, c'est-à-dire de l'argument de recherche plutôt que le champ Next des mots de chaque association en mémoire. Ceci permet de localiser le début de la chaîne, ou éventuellement de plusieurs chaînes dans un texte en mémoire, le rôle de l'opérateur TAG étant inchangé.

Si l'on revient à la figure 1, on peut voir sur cette figure que le module de gestion des réponses multiples 15 est connecté à sa sortie à une entrée d'un registre d'adresses 17. En effet, les données de résultats obtenues en sortie du TAG 13 sont introduites dans ce module de gestion des réponses multiples 15 qui génère à chacune des données une adresse. Lesdites données sont alors introduites dans le registre d'adresses 17, puis elles sont envoyées du registre d'adresses vers un décodeur 19 qui les décode et fournit au plan mémoire 1 des données aptes à être lues.

Selon un autre mode de réalisation de cette architecture, le registre d'adresses 17 peut être connecté en parallèle avec un registre de données non représenté sur la figure, les deux registres, respectivement d'adresses et de données, étant eux-mêmes connectés à un additionneur/soustracteur. Cet additionneur/soustracteur reçoit également en entrée le type d'opérations à réaliser, c'est-à-dire, l'addition ou la soustraction.

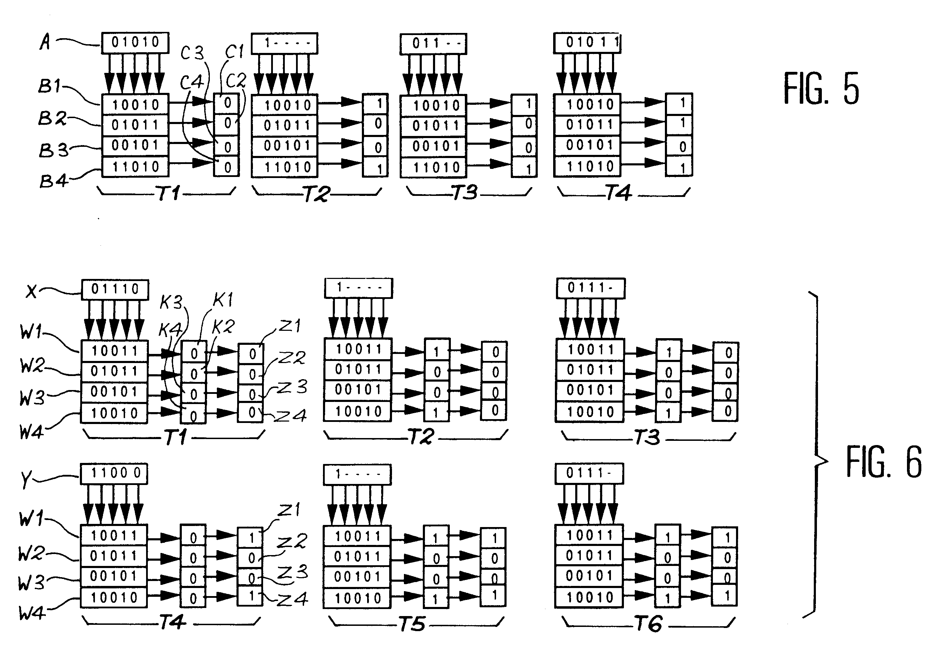

Sur la figure 5, on a illustré des étapes d'un test d'inégalité dans lequel l'argument de recherche est la donnée 01010 que l'on cherche à comparer aux données mémorisées 10010, 01011, 00101 et 11010.

Pour ce test d'inégalité, on cherche à déterminer tous les mots de la mémoire dont le contenu est supérieur à 01010. Cette opération d'inégalité est ramenée à une succession d'opérations d'égalité. Pour chaque bit de l'argument de recherche 01010, on effectue les étapes suivantes :
- balayer, à partir du bit de poids fort, l'argument de recherche en quête d'un bit à "0" ;
- initialiser ce bit à "1" ;
- masquer tous les bits de poids plus faible que ce bit initialisé à 1 ;
- réaliser l'opération de test d'égalité sur tous les mots de la mémoire ;
- accumuler le résultat dans le registre de réponses.

On recherche donc les données mémorisées qui sont supérieures à l'argument de recherche. Sur cette figure, on a représenté, dans le bloc A, l'argument de recherche, dans les blocs B1, B2, B3, B4, les données stockées en mémoire et dans les blocs C1, C2, C3, C4, les réponses obtenues après chaque comparaison.

Comme toutes les opérations réalisées par la mémoire associative selon l'invention, le test d'inégalité est ramené à des opérations successives d'égalités. Aussi, l'argument de recherche en A est comparé selon un test d'égalité successivement aux données B1, B2, B3, B4 stockées dans la mémoire. La donnée A n'étant égale à aucune des données de la mémoire, les réponses en C1, C2, C3, C4 sont nulles.

L'argument de recherche est alors introduit dans le module de scrutation puis dans l'unité de masquage où il est traité. A la sortie du décodeur du module de scrutation (ou du second registre à décalage, dans le cas du second mode de réalisation), la valeur générée est 10000. La donnée de comparaison obtenue en sortie du module de scrutation, c'est-à-dire en sortie du circuit logique OU-exclusif, est alors 11010. L'argument de recherche est donc reproduit avec son premier bit "0" positionné à "1". L'argument de recherche est donc modifié : son bit de poids fort est mis à "1" et les valeurs qui suivent sont masquées et ne sont donc pas prises en compte dans cette opération d'égalité. Le bit de poids fort de valeur 1 est comparé selon un test d'égalités avec les bits de poids fort des données B1, B2, B3 et B4. On obtient en réponses C1 à "1", ainsi que C4 à "1" et C2 et C3 à "0".

Dans la table T3, la donnée A de la table T2 a été traitée à nouveau dans le module de scrutation et dans l'unité de masquage et elle devient 011 suivie de deux bits masqués. Ce sont donc les trois bits de poids le plus fort 011 qui sont comparés aux bits équivalents des données stockées dans la mémoire, c'est-à-dire aux bits 100 de la donnée B1, aux bits 010 de la donnée B2, 001 de la donnée B3 et 110 de la donnée B4. Les réponses obtenues sont 1 pour C1 et C4, 0 pour C2 et C3.

Enfin, dans la table T4, la donnée A de la table T3 a, une fois de plus, été traitée dans le module de scrutation et l'unité de masquage et elle devient 01011. Ainsi, toute la donnée A est comparée aux données B1, B2, B3, B4 par un test d'égalité qui a pour réponse C1, C2 et C4 à 1 et C3 à 0.

Cette illustration montre comment il est possible de ramener un test d'inégalité à une succession de test d'égalité.

Sur la figure 6, on a illustré les étapes d'une opération de recherche des valeurs comprises entre deux limites X et Y, de valeur respective 01110 et 11000. Cette figure sera décrite de façon plus succincte que la figure précédente car son principe de comparaison est sensiblement identique du fait que les opérations d'inégalité (de supériorité et d'infériorité) sont ramenées à une succession d'opérations d'égalité.

On recherche donc, dans cette opération de recherche, les valeurs contenues dans un intervalle [X, Y]. Pour cela, on teste l'inégalité X inférieure aux valeurs recherchées et l'inégalité Y supérieure auxdites valeurs recherchées ; on effectue ensuite l'intersection des résultats obtenus dans chacun des deux tests précédents.

La valeur X est donc le premier argument de recherche et la valeur Y, le second. Les valeurs W1, W2, W3, W4 sont les valeurs des données stockées dans la mémoire, K1, K2, K3, K4 sont les réponses obtenues pour le premier test d'inégalité ($X < ?$) et Z1, Z2, Z3, Z4 sont les réponses obtenues pour le second test d'inégalité ($Y > ?$).

Les tables T1, T2, T3 montrent les trois opérations d'égalité successives effectuées pour trouver les valeurs supérieures à X. Les tables T4, T5, T6 montrent les résultats obtenus pour les trois opérations d'égalité effectuées pour trouver les valeurs inférieures à Y. Dans la table T3, on a donc trouvé, après détermination de valeurs intermédiaires dans les tables T1 et T2), la réponse du premier test, à savoir K1 et K4 à 1 et K2 et K3 à 0. Dans la table T6, on a mémorisé les réponses K1, K2, K3, K4 et on a déterminé les réponses Z1 et Z4 à 1 et Z2 et Z3 à 0, après détermination de valeurs intermédiaires dans les tables T4 et T5. Les valeurs contenues dans la mémoire et comprises dans l'intervalle (X, Y) sont donc les données W1 et W4 de valeurs respectives 1011 et 10010.

On comprend donc que cette architecture permette de réaliser, aussi bien que des opérations d'égalité, des opérations d'inégalité, de recherche entre deux limites, de recherche de maximum, de convergence, de calculs de limites absolues, de recherche de proximité, en ramenant toutes ces opérations à des successions d'opérations d'égalité.

Cette architecture de mémoire associative permet également de réaliser, sans être modifiée, des opérations d'addition parallèle et des opérations dérivées (telles que la multiplication) avec la possibilité d'écriture multiple sur tous les mots de la mémoire.

De plus, le codage paramétrable effectué grâce à l'opération Assoc permet que le traitement intrinsèque des opérations soit effectué en parallèle ou en pipeline. Ainsi, la mémoire associative est indépendante vis-à-vis du système hôte et donc capable d'effectuer une succession de traitements sans faire appel régulièrement au processeur du système.

## Revendications

1. Mémoire associative permettant la comparaison de données de recherche avec une pluralité de données stockées dans au moins un registre de données et disponibles sur des sorties de ce registre, et comportant :
   - des moyens de comparaison (1, 3, 5, 7) ayant des entrées reliées aux sorties du registre de données pour traiter les données de recherche et comparer lesdites données de recherche avec les données stockées, ces moyens de comparaison fournissant, sur au moins une sortie, des données de résultat ;
   - des moyens de manipulation ayant au moins une entrée reliée à la sortie des moyens de comparaison pour traiter les données de résultat obtenues après comparaison des données de recherche avec les données stockées ;
   - une unité de contrôle (21) pour contrôler des échanges d'informations entre les moyens de comparaison et les moyens de manipulation,
   
   caractérisée en ce que les moyens de manipulation comportent une unité de traitement d'associations de mots de longueur variable (13), chaque donnée de recherche et chaque donnée stockée comprenant un mot ou une association de mots de longueur variable.

2. Mémoire associative selon la revendication 1, caractérisée en ce que les moyens de comparaison comportent un plan mémoire (1) et une unité de prétraitement (3, 5, 7) générant, à partir des données de recherche, des données de comparaison pour exécuter, dans le plan mémoire, une pluralité de fonctions de comparaison.

3. Mémoire associative selon la revendication 2, caractérisée en ce que les moyens de comparaison comportent en outre une unité de masquage (5, 7), reliée à une sortie de l'unité de prétraitement et à une entrée du plan mémoire, pour masquer au moins une partie d'un mot d'une donnée de comparaison de façon à ce que, dans le plan mémoire, la partie non masquée du mot soit comparée avec des parties correspondantes des mots des données stockées.

4. Mémoire associative selon la revendication 2 ou 3, caractérisée en ce que l'unité de prétraitement comporte, d'une part, un registre à décalage (31) relié à une sortie du registre de données et à une entrée de l'unité de contrôle, un décompteur de bits (32) relié à une sortie de ladite unité de contrôle et un décodeur (33) relié à une sortie du décompteur de bits, et, d'autre part, un registre d'adresses (35) connecté à la sortie du registre de données et un circuit logique OU-exclusif (36) connecté à une sortie du registre d'adresses et à une sortie du décodeur pour fournir la donnée de comparaison.

5. Mémoire associative selon la revendication 2 ou 3, caractérisée en ce que l'unité de prétraitement comporte, d'une part, un premier registre à décalage (31) relié à une sortie du registre de données et à une entrée de l'unité de contrôle et un second registre à décalage (34) relié à une sortie de ladite unité de contrôle, et, d'autre part, un registre d'adresses (35) connecté à la sortie du registre de données et un circuit logique OU-exclusif (36) connecté à une sortie du registre d'adresses et à une sortie du second registre à décalage pour fournir la donnée de comparaison.

6. Mémoire associative selon l'une quelconque des revendications 1 à 3, caractérisée en ce que l'unité de traitement des associations comprend un module de traitement des mots (13) pour gérer un dialogue entre les mots d'une même association, chaque mot d'une association comportant un champ de position indiquant la position du mot dans l'association et un champ de résultat indiquant le résultat de la comparaison du mot de la donnée de recherche avec les mots des données stockées, la gestion du dialogue s'effectuant en fonction des indications contenues dans les champs de position et de résultat.

7. Mémoire associative selon l'une quelconque des revendications 1 à 3, caractérisée en ce que l'unité de traitement des associations comporte en outre un module de gestion de réponses multiples (15) pour générer une adresse à chacune des données de résultat.

FIG. 1

FIG. 2A

FIG. 2B

FIG. 3

FIG. 4

EP 0 554 177 A1

FIG. 5

FIG. 6

Office européen
des brevets

**RAPPORT DE RECHERCHE EUROPEENNE**

Numero de la demande

EP    93 40 0209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 380 294 (CODEX CORPORATION) 1 Août 1990 * le document en entier * ----- | 1 | G06F15/415 G06F15/409 |
| | | | **DOMAINES TECHNIQUES RECHERCHES (Int. Cl.5 )** |
| | | | G06F |

Le présent rapport a été établi pour toutes les revendications

| Lieu de la recherche | Date d'achèvement de la recherche | Examinateur |
|---|---|---|
| LA HAYE | 08 AVRIL 1993 | KATERBAU R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)